# EUROPÄISCHE PATENTANMELDUNG

(11) **EP 1 755 055 A1**
(43) Veröffentlichungstag der Anmeldung: **21.02.2007**
(21) Anmeldenummer: 06119128.4
(22) Anmeldetag: 17.08.2006
(51) Int. Cl.: G06F 17/30, H04N 7/173

(54) **System und Verfahren zur Publikation von digitalen und/oder analogen Video- und/oder Audiodaten, nämlich zur Publikation von Nachrichten, Werbebotschaften oder dergleichen, die insbesondere an öffentlichen Plätzen und öffentlichen Einrichtungen auf einem oder mehreren Präsentationsflächen darstellbar sind**

(30) Priorität: 17.08.2005 DE 202005012939 U
(71) Anmelder: ITVC Invest GmbH, 8280 Kreuzlingen (CH)
(72) Erfinder: Sieberling, Ulrich, 23847 Rethwisch (DE)
(74) Vertreter: Muri, Peter

(57) **Zusammenfassung**

Um Werbekosten reduzieren zu können und auf Druckkosten, Logistikkosten und Montagekosten zu verzichten, wird erfindungsgemäss vorgeschlagen, ein System (1) zur Übertragung von digitalen und/oder analogen Video- und/oder Audiodaten bereitzustellen, dass im wesentlichen aus einer Datensteuerungseinrichtung (3), einem oder mehreren Bildschirmen (2) sowie einer Kommunikationseinheit (5) besteht, wobei die von einem Server (4) bereitgestellten Daten über die Kommunikationseinheit (5) an die Datensteuerungseinrichtung (3) im Pull-Verfahren übertragen werden.

Auf diese Weise lässt sich beispielsweise Werbung präzise steuern und in Abhängigkeit der Tageszeit, Wetterlage, Wochentag, vorhandenen Zielgruppen anpassen.

## Beschreibung

### Technisches Gebiet

Die Erfindung betrifft ein System und ein Verfahren zur Publikation von Nachrichten, Werbebotschaften oder dergleichen, die insbesondere an öffentlichen Plätzen und öffentlichen Einrichtungen auf einem oder mehreren Präsentationsflächen darzustellen sind.
Stand der Technik

Zur Versorgung von Bildschirmen mit Daten oder Signalen, die Darstellungen beinhalten wie beispielsweise Filme, Videoclips, Standbilder oder dergleichen repräsentieren, existiert eine Vielzahl von unterschiedlichen Systemen. Die Möglichkeit, Video- und Audiosignale kontinuierlich und in Echtzeit auf Bildschirme zu übertragen, so dass der Betrachter sie unmittelbar vor Ort empfangen kann, sind seit langem durch fernsehsystemähnliche Einrichtungen bekannt. Hierzu werden Sendeeinrichtungen bereitgestellt, die entsprechende Video- und/oder Audiodaten an Empfängereinheiten übermitteln. Diese Empfängereinheiten dienen zur Auswertung der entsprechenden Signale und Berechnung von Daten, die es ermöglichen, die in den Video- und/oder Audiodaten verschlüsselten Nachrichten und Werbebotschaften auf einem Bildschirm darzustellen.

Darüberhinaus ist seit einiger Zeit zunehmend von der Möglichkeit gebraucht gemacht worden, Bildschirme als so genannte Präsentationsflächen in Ausbildung von Displays zur Anzeige von Werbebotschaften, insbesondere an verschiedenen Öffentlichen Orten zu nutzen. Entweder werden diese Displays von Einrichtungen gespeist, die unmittelbar neben den Displays angeordnet sind. Solche Einrichtungen können beispielsweise Videorekorder-, DVD- oder sonstige der Funktion entsprechende Abspielgeräte sein. Bei mehreren Bildschirmen ist vorgesehen entweder das von den Abspielgeräten bereitgestellte Signal zu splitten oder eben jedem Bildschirm sein eigenes Abspielgerät zuzuordnen.

Alternativ ist auch vorgesehen, mittels einer Personalcomputereinheit die auf Speichermedien bereitgestellten Informationen und Werbebotschaften auf eine Anzeigeeinheit zu bringen.

Ferner ist aus der DE 19808513 A (SCREENSHOT AGENTUR FUER WERBUNG (DE)) 02.09.1999 ein Verfahren und eine Einrichtung zur Publikation von Nachrichten und Werbebotschaften unter dergleichen darstellenden Daten bekannt. Dieser Einrichtung liegt die Aufgabe zugrunde, ein Verfahren vorzuschlagen, mit dem die entsprechenden Daten auf schnellstem Wege an nahezu beliebige Orte öffentlich angeboten werden können. Gelöst wird diese Aufgabe dadurch, dass die zu publizierenden Daten in einem öffentlichen Datenkommunikationsnetz eingespeist und diesem am Publikationsort mittels einer steuerbaren Abfrageeinrichtung entnommen und auf einem Monitor dargestellt werden. Diese Einrichtung dient insbesondere dazu, in öffentlichen Gebäuden wie Bahnhöfen, Flughäfen, Kaufhäusern und dergleichen, Monitore aufzustellen, auf denen Informationen wie Abfahrtszeit, Werbebotschaften oder ähnliches publiziert werden können. Die Abfrageeinrichtung selbst wird derweil von einer Zentrale aus oder über ein lokales Abfrageprogramm gesteuert. Zur Ausführung ist es notwendig, zwei Einrichtungen bereitzustellen, mittels denen die entsprechenden Daten gespeichert, übertragen und dargestellt werden können. Die erste Einrichtung dient dazu, die entsprechenden Daten zu speichern und diese in das Datenkommunikationsnetz zu übertragen. Die zweite Einrichtung dient dazu, die ankommenden Daten zu entnehmen und derart aufzubereiten, dass sie auf einem Monitor darstellbar sind. Es wird vorgeschlagen, die Abfrageeinrichtung und die Monitorsteuerung durch einen Personalcomputer auszubilden.

Aus der DE 69822138 T (CAPTIVATE NETWORK, INC., WESTFORD, MASS., US) 12.03.1998 ist ein Informationsanzeigesystem für Aufzüge bekannt. Es dient dazu, eine Informationsanzeigeeinrichtung und ein Verfahren bereitzustellen, zum einfachen aktualisieren von Anzeigen, so dass Informationen, zusammengesetzt und aufbereitet an einer zentralen Stelle, einfach an den Anzeigen dargestellt werden können. Es wird erläutert, die Informationsanzeigeeinheit in Aufzugkabinen bereitzustellen. Hierzu wird vorgeschlagen, die Anzeigeeinrichtung, die in den Aufzügen angeordnet ist, mit einer Datenspeichereinrichtung in der Ausbildung eines Servers, der innerhalb des Gebäudes angeordnet ist, in dem auch der Aufzug angeordnet ist, zu verbinden. Dieser Gebäudeserver dient dazu, die entsprechenden Informationen, die er von einem Zentralserver erhält, aufzubereiten und an die Anzeigeienrichtung in den Aufzügen zu übermitteln.

In der EP 1313086 A (KARAKAWA TAKASHI (JP)) 10.07.2001 ist ein so genanntes elektronisches Werbeplakatsystem beschrieben. Dieses System eignet sich dazu, die in digitaler Form vorliegende Werbung an öffentlichen Plätzen darzustellen, ohne das es notwendig ist, von Hand Werbung beispielsweise auf Litfasssäulen oder Plakatwänden aufzukleben bzw. diese entsprechend auszuwechseln. Die Ausführung des Systems besteht darin, dass eine Vielzahl von Bildschirmen an unterschiedlichen Orten des öffentlichen Lebens angeordnet werden. Jeder Bildschirm ist mit einem zentralen Server, der die Daten bereitstellt über einen Personalcomputer und ein Netzwerk verbunden. Vorzugsweise wird das Netzwerk aus einem Mobilfunknetzwerk über so genannte Gateways oder aber auch über ein WirelessLAN gebildet. Die Personalcomputer sind mit Displays verbunden, um die Publikation, die auf dem Bildschirm dargestellt wird, vorzubereiten und zu kontrollieren. Ferner sind Berührungsflächeneinheiten, Barcode-Leser, Drucker und andere Einrichtungen, wie Fernbedienung, Lautsprecher, TV und Audioreceiver mit dem Personalcomputer verbunden. Der Server ist mit einem Vertriebsserver wiederum konnektiert, der für den Vertrieb von Bild- und Toninformationen zuständig ist. Zusätzlich ist ein Managementserver vorgesehen, der den entsprechenden Inhalt der Daten, die dann auf den einzelnen Bildschirmen dargestellt werden sollen, verwaltet. Ferner kommuniziert der zuletzt genannte Server mit Werbeagenturen, die für die Kunden die entsprechende Werbung zur Publikation bereitstellen.

In der DE 10201945 A (NEW ID GMBH (DE)) 13.11.2003 ist ein Verfahren zur Verteilung von Informationen und Werbung für den Strassenverkehr beschrieben. Zur Verteilung dieser Information sind Anzeigegeräte vorgeschlagen, die beispielsweise Laufschriften, Texte oder Bilder entsprechend darstellen können. Die Übermittlung der dargestellten Information erfolgt über Funk, RDS oder jede andere in Frage kommende kabellose Übertragungsmöglichkeit, so dass das Anzeigegerät im inneren oder äusseren Teil eines Fahrzeugs angebracht ist, wobei als Fahrzeug, PKW, Kleintransporter, LKW, Fahrräder, Motorräder oder ähnliches verstanden werden kann. Eine mit der Anzeigeeinheit gekoppelte Empfangseinheit empfängt die von einer Sendeeinheit gesendeten Daten, bereitet diese auf und stellt diese auf einer Anzeigeeinheit dar. In der Regel folgt die Übermittlung der Daten bidirektional, d.h. es werden sowohl Daten empfangen als auch gesendet und diese entsprechend verarbeitet.

Aus der US 2004/0172326 A (YEO DAVID ; THESEIRA COLIN ; TRIPATHI DINESH) 22.04.2004 ist ein Anzeigesystem bekannt, mittels dem Informationen, beispielsweise Werbung dargestellt werden kann. Das System umfasst eine Anzeigeinrichtung, die auf einer Empfangsseite angeordnet ist. Das Anzeigesystem umfasst eine Vielzahl von Bildschirmen, die über entsprechende Einrichtungen wireless mit einem Personalcomputer gekoppelt sind. Diese Personalcomputer ist wiederum mit einem Netzwerk gekoppelt, über das von einem Zentralserver aus die zur Anzeige bringende Information bereit und an die jeweiligen Personalcomputer bereitstellt und gesendet werden.

Aus der PCT/WO 0195195 (MOIN VALLEY CO LTD (KR); YANG HYUN TAEK (KR); SUN SAM KYU (KR)) 04.09.2000 wird gelehrt, eine Vorrichtung und ein Verfahren zur Darstellung von Werbebotschaften anzuwenden, wobei die Vorrichtung einen Webserver umfasst, der über ein Netzwerk mit einem Server der Daten bereithält, verbunden ist. Der Webserver selbst ist wiederum mit einer Anzeigereinrichtung gekoppelt, wobei jeder Dritte die Möglichkeit hat, über den Webserver selbst Anzeige- bzw. Werbebotschaften einstellen zu können. Somit besteht die vorgeschlagene Einrichtung darin, dass ein Personalcomputer in Ausbildung eines Webservers gekoppelt ist mit einer Anzeigeinrichtung, wobei jeder Dritte auf den Werbserver Zugang hat.

Die DE 20102097 U (HEILAND, BERND, DR.-ING., 48351 EVERSWINKEL, DE) 07.02.2001 zeigt eine Bildwiedergabeeinrichtung für Werbe- und Informationszwecke. Diese Wiedergabeeinrichtung in Ausbildung eines Bildschirms ist dadurch gekennzeichnet, dass diese eine Rechnereinheit mit einem Controller und einem Speicher mit mindestens einem Speichermedium und mindestens eine Grafikschnittstelle umfasst, wobei das Speichermedium Festplatten oder handelsübliche Speicherkarten sein können. Die auf der Speichermedium bereitgestellten Daten werden in definierten Sequenzen bereitgestellt und angezeigt und können durch zusätzliche Bedienfelder "vorwärts und rückwärts" ausgewählt werden.

Die Veröffentlichung US 20030060190 A (MALLART RAOUL) 20.09.2002 zeigt ein drahtloses Übertragungssystem für Multimediainhalte, die von einem Server an einen Bildschirm übertragen werden. Diese Daten werden in einem Speicher bis zur Darstellung vorgehalten. Sobald eine entsprechende Freigabe erfolgt, werden diese dauerhaft bzw. endlos gezeigt.

Die japanische Veröffentlichung JP 2000347576 (NTT DATA CORP) 08.06.1999 zeigt ein System zur Übertragung von Werbeinhalten auf Projektoren. Die einzelnen Projektoren sind über eine drahtlose Verbindung mit einem Host verbunden, der die Daten bereitstellt und an die Projektoren überträgt.

Schliesslich zeigt die Veröffentlichungsschrift WO 0165411 A (THINAIRAPPS INC (US); CONNEELY SHANE (US); FREITAS NATHANIAL X (US); MEYER WILL (US); OAKES JONATHAN) 29.02.2000 ein System zur drahtlosen Übertragung von Werbeinhalten und zwar am Beispiel eines PDAs, auf welchem Daten zur Darstellung eines Internet-Werbe-Banners gepushed werden. Es handelt sich dabei um einen Anwendungsfall aus dem Bereich der Mobiltelefonie.
Nachteile des Standes der Technik

Alle vorgenannten Systeme und Verfahren, sowie deren Verwendung haben den Nachteil, dass zur Darstellung von Video- und/oder Audiodaten beispielsweise in Form von Werbebotschaften der apparative Aufwand vergleichsweise hoch ist und sich auch mit der Anzahl der Bildschirmen multipliziert. Die Rechnereinheiten zur Bildschirmsteuerung erfordern in der Regel zusätzliche Gehäuse, so dass sich Probleme bei einer repräsentativen Installation der Bildschirme ergeben. Überdies kann ein Programmwechsel bzw. ein Informationsinhaltswechsel nur an den Einzelbildschirmarbeitsplätzen vor Ort vorgenommen werden. Sofern diese Einrichtungen von externen, d.h. über einen entsprechenden Webserver konfiguriert werden, ist es erforderlich, die Personalcomputers, die mit den Anzeigeeinheiten verbunden sind, entsprechend zu programmieren, dass auch die Daten von dem Server der diese bereitstellt und sendet aufgenommen werden.

In der Regel ist es dann notwendig, dass jeder Personalcomputer eine Netzwerkverbindung, beispielsweise in Form einer Telefonverbindung oder einer Internetverbindung herstellt.

Bekannte Systeme zur Darstellung von Publikationen sind damit sehr komplex und die Komplexität geht einher mit der entsprechenden Wartungsbedürftikeit und Anfällligkeit.

Insgesamt sind die aus dem Stand der Technik bekannten Systeme den zunehmenden Anforderungen an Kostenminimierung und Flexibilität nicht gewachsen.
Darstellung der Erfindung
Technische Aufgabe

Daher ist es Aufgabe der vorliegenden Erfindung, ein Übertragungssystem sowie eine Verwendung eines bekannten Systems derart zu optimieren, dass auf kostensparende und flexible Weise bei vergleichsweise geringem apparativen Aufwand eine Versorgung einer grösseren Anzahl von Bildschirmen mit Video- und/oder Audiodaten möglich ist.

Diese Aufgabe wird erfindungsgemäss durch ein System gemäss den Merkmalen von Anspruch 1 sowie ein Verfahren gemäss Anspruch 10 sowie einer speziellen Verwendung gemäss Anspruch 11 gelöst.
Vorteilhafte Wirkungen

Eine der wesentlichen Vorteile der Erfindung besteht darin, dass die Versorgung hinsichtlich neuer Video- und/oder Audiodaten, die zur Publikation vorgesehen sind, im Hintergrund geschieht, so dass während der Publikation der eigentliche Betrieb nicht gestört wird.

Ein weiterer wesentlicher Vorteil der Erfindung besteht darin, dass der Aufstellort, des erfindungsgemässen Bildschirms zusammen mit einer Datensteuerungseinrichtung frei wählbar ist. Ausser einem Stromanschluss, der notwendig ist, um den Bildschirmbetrieb zu ermöglichen, sind keine weiteren Anschlüsse notwendig. Dies bringt den wesentlichen Vorteil mit sich, dass der Bildschirm vergleichbar mit einer Plakatwand an der Litfasssäule an beliebigen Orten, sehr flexibel aufgestellt werden kann. Aufgrund dessen, dass auch der Bildschirmhintergrund beleuchtet ist, sind auch nicht beleuchtete Bereiche, beispielsweise Zugangstunnels, Bahnhöfe, etc. auf einfache Art auswählbar.

Diese Ausführung bringt weiterhin den Vorteil mit sich, dass der Bildschirm vandalismussicher sind, da sie keine weiteren externen Vorrichtungen (ausser dem besagten Stromanschluss) benötigen.

Dadurch können die notwendigen Elektronikkomponenten, wie sie vom Stand der Technik vorgeschlagen und verwendet werden, erheblich reduziert werden. Eine Wartung entfällt.

Eine bevorzugte Ausführungsform der Erfindung sieht vor, dass vorteilhafterweise zur Darstellung der entsprechenden Publikationen auf herkömmliche Einrichtungen, wir beispielsweise LED-Bildschirme, Plasmamonitore, TFT-Monitore, Beamer oder Videowände zurückgegriffen wird. Um trotzdem die zentral organisierten Video- und/oder Audiodaten, die zur Publikation vorgesehen sind, an beliebigen Orten, an denen die entsprechenden Einrichtungen vorhanden sind, trotzdem abhängig von der Tageszeit, Wochenzeit, Zielgruppen oder ähnlichen Daten darstellen zu können, es ist eine so genannte Datensteuerungseinheit vorgesehen, die die Eigenschaften besitzt, Video- und Audiodaten zu empfangen bzw. diese im PULL-Verfahren von einem Server zu beziehen. Ferner sind neben der Datensteuerungseinheit Mittel vorgesehen, die dazu dienen, diese empfangenen Daten zu speichern und zum Darstellen auf einem oder mehreren der bereitgestellten Einrichtungen umzuwandeln. Diese Einrichtung benötigt ausser einem Stromanschluss keine weiteren äusseren Hilfsmittel, so dass sie als so genanntes Add-On an eine herkömmliche Einrichtung, wie beispielsweise einem Beamer oder eine Videowand ankoppelbar ist. Zu dem Datenempfang ist vorteilhafterweise ein WLAN-Modul, ein USB-Anschluss oder auch ein GPRS oder gleichwertiger Anschluss vorgesehen. Für die Datenspeicherung selbst können Mittel wie beispielsweise eine Festplatte oder aber auch Speicherkarten verwendet werden.

Die Datensteuerungseinheit weist unterschiedliche Ausgänge auf, so dass sie an unterschiedliche Einrichtungen adaptierbar ist. So können beispielsweise Ausgänge in DVI, VGA, S-Video oder Audio-Out-Format aber auch Composit-Video, VPBR oder ähnliches Standards vorgesehen sein.

Da die Datensteuerungseinheit ansonsten keine weiteren Funktionen übernimmt und die ihr zugetragene Information sehr spezifiziert sind, genügt es zur Bereitstellung einer notwendigen Rechnerleistung, einen Prozessor vorzusehen, der die Daten empfängt, speichert und aufbereitet. Weitere Komponenten, wie sie an sich aus einem Personalcomputer bekannt sind, sind nicht notwendig. Daher lässt sich die Datensteuerungseinrichtung als so genannten Embedded-System ausbilden. Dadurch sind die Abmasse sehr gering und dies bietet wiederum den Vorteil, das die Datensteuerungseinrichtung zusammen mit den weiteren Mitteln als Add-On in ein Gehäuse eines Bildschirms sehr unauffällig und für den Betrachter des Bildschirmes unsichtbar untergebracht werden kann.

Eine besonders vorteilhafte Ausführungsform der Ausführung der Datensteuerungseinheit weist den Vorteil auf, dass diese sehr einfach programmierbar ist. Die Programmierung erfolgt mit einer auf einem Prozessor gespeicherten Software. Diese Software ist aktivierbar über beispielsweise eine Fernbedienung, die mit der Datensteuerungseinrichtung konnektierbar ist. Durch Darstellung des Programmablauf auf dem Bildschirm ist eine einfache Eingabe der für das Abholen der bereitgestellten Daten möglich.

Durch eine Eingabe einer entsprechenden IP-Adresse sowie Datenübertragungsrate und sonstigen notwendigen Daten wird die Grundlage fixiert, um die Daten entsprechend abzurufen. In einem so genannten Pull-Verfahren werden die Daten von einem Server, der durch die IP-Adresse identifiziert ist, abgerufen. Durch die bereitgestellte Software der Datensteuerungeinrichtung können in Abhängigkeit von diversen Umständen und Vorgaben die entsprechend notwendigen Daten abgerufen werden. Entweder ist vorgesehen, ständig eine entsprechende Datenleitung aufrecht zu halten, so dass vergleichbar mit dem so genannten EMail-Push-Verfahren, Signale empfangen werden, die derart zu deuten sind, dass neue Video- und Audiodaten oder es besteht die Möglichkeit, dass in einem bestimmten Zeitrhythmus über eine so genannte Pull-Anfrage an den Server eine Anfrage (Request) gestellt wird, ob neue Daten vorliegen.

Das Pull-Verfahren hat den Vorteil, dass es nicht notwendig ist, ständig eine Datenleitung, wie beispielsweise eine Internetleitung, eine Telefonverbindung oder ähnliches aufrecht zu erhalten. Im vorgegebenen Rhythmus kann die Datensteuerungseinheit die entsprechenden Daten abfragen.

Das Abfragen kann beispielsweise über eine Kabelverbindung, aber auch kabellos, beispielsweise über GPRS, UTMS, HSDPA oder wimax erfolgen.

Aufgrund des Pull-Verfahrens entstehen auch die entstehenden Übertragungskosten auf Seiten des Besitzers der Anzeigeeinrichtung und nicht auf Kosten derjenigen, die die Daten bereitstellen. Voraussetzung hierfür ist, dass der Benutzer nach dem heutigen Stand der Technik eine GSM-Karte bei einem Provider beantragt und diese an entsprechender Stelle der Datensteuerungseinheit hinzufügt.

Eine vorteilhafte Ausbildung der Datensteuerungseinrichrtung sieht auch vor, dass nicht nur ein sondern mehrere Bildschirme bzw. Anzeigeeinrichtungen mit demselben Daten versorgt werden. Dadurch ergibt sich die Möglichkeit, dass nur eine einzige Datensteuerungseinrichtung bereitgestellt werden muss, um mehrere Bildschirme mit den gleichen Informationen zu bedienen. Auch dadurch können erhebliche Hardwarekosten eingespart werden.

Eine Weiterbildung der erfindungsgemässen Vorrichtung sieht vor, dass an der Datensteuerungseinrichtung Sensoren vorhanden sind, die Umgebungsdaten empfangen. Anhand dieser Umgebungsdaten können entsprechende Datensätze übermittelt werden. So kann beispielsweise die Temperatur über die Sensoreinheit gemessen werden, was wiederum dazu führt, dass im Push-Verfahren die Temperatur an eine zentrale Einheit übermittelt wird und anhand eines Rasters von Seiten des Zentralservers entschieden wird, welche Art von Werbung beispielsweise auf der Anzeigeeinrichtung erscheinen soll. Dies bringt die Möglichkeit mit sich, dass in Abhängigkeit von der Aussentemperatur speziell ausgerichtete Werbung erfolgen kann. Die Werbung kann auch in Abhängigkeit von Helligkeit und Dunkelheit erfolgen, unabhängig davon wo das Gerät aufgestellt ist. Dadurch werden entsprechende Zeitumrechnungen eingespart. Weitere wetterbeeinflussende Faktoren, die insbesondere auf das Gemüt der Personen wirken, die Werbeinformation auf den Anzeigeeinrichtungen erkennen, können ebenfalls mit solchen Sensoren erfasst und entsprechend umgesetzt werden.

Die Vorteile einer solchen Vorrichtung sind damit neben der Kosteneinsparung auch natürlich die Einsparung hinsichtlich der Erstellung von Trägermaterialien, wie beispielsweise Folien, Einsparung hinsichtlich Druck und Lithographiekosten, aber auch hinsichtlich Einsparung in Bezug auf Logistikkosten sowie Einsparungen der Arbeitszeit beispielsweise für den Austausch der Medien.

Ein weiterer wesentlicher Vorteil der erfindungsgemässen Vorrichtung liegt darin, dass nicht nur statische Bilder, sondern auch bewegte Bilder eventuell sogar mit Audiodaten dargestellt werden können.

In zeitlichen Rhythmen, wie beispielweise monatlich, wöchentlich oder täglich, sogar stündlich, können die entsprechenden Werbefilme geschaltet werden. Es können somit auch tageszeitabhängige Aktionen, abhängig von der jeweiligen Kundenstruktur (vormittags, mittags, abends) geschaltet werden.

Die Datensteuerungseinheit ruft Ihre Daten von einer Kommunikationseinheit ab, die die publizierten Daten bereitstellt. In Form eines Content-Management-Systems werden dies Daten gezielt vor Ort archiviert und bereitgestellt, so dass durch die Pull-Anfrage der entsprechenden Datensteuerungseinheit ohne Zeitverzögerung die entsprechenden Daten geladen werden können.

Das Content-Management-System ist mandantenfähig, dies bedeutet, dass für unterschiedliche Teilnehmer, unterschiedliche Daten bereitgestellt werden können. Aber auch innerhalb eines Teilnehmers können Daten bereitgestellt werden, die bildschirmbezogen abgespeichert werden. Dies bedeutet, dass beispielsweise der Bildschirm an einem Eingang eines Kaufhauses (gleicher Teilnehmer) andere Daten erhält, als derjenige, im dritten Stock, in dem Herrenbekleidung angeboten wird.

Durch eine Software kann das Content-Management-System administriert werden. Es sieht vor, dass in Bezug auf den jeweiligen Standort des Bildschirms die Video- und/oder Audiodaten ausgewählt werden. In einem weiteren Arbeitsschritt ist ein Zeitrhythmus zu wählen, wann und in welchem Rhythmus die Werbung dargestellt wird.

Der erfindungsgemässe Bildschirm lässt sich vorteilhafterweise mit einer Produktpräsentationseinrichtung kombinieren, die für die Präsentation von Waren geeignet sind. So können beispielsweise Einrichtungen geschaffen werden, die neben einem Bildschirm auch Halte- und Präsentationseinrichtung für beispielsweise Bücher umfassen. Somit wird der Betrachter sowohl über akustische als auch über visuelle Mittel auf entsprechende Produkte hingewiesen. Die Steuerung der Werbung kann wiederum über die erfindungsgemässe Datensteuerungseinrichtung erfolgen, so dass in Abhängigkeit der auf dem Ständer abgelegten Waren, die beispielsweise über die ISBN-Nummer oder sonstige Detektiereinrichtungen erkannt werden können, die entsprechende Audio- und Videodaten bereitgestellt und angezeigt werden.

Für denjenigen, der die Publikation innerhalb eines Unternehmens bereitstellt, vereinfacht sich die Vorgehensweise erheblich, da es ausreicht, die Ware entsprechend detektieren zu lassen, so dass die Datensteuerungseinrichtung die Daten an den Zentralserver pushed und der Zentralserver dann über ein Pull-Verfahren die dem Produkt zugeordneten Audio- und/oder visuellen Daten bereitstellt bzw. diese übermittelt werden.

Diese Einrichtung kann auch auf andere Produkte übertragen werden. So können beispielsweise auf diese Art und Weise Kosmetika, Getränke oder sonstige Güter des allgemeinen täglichen Lebensbedarfs präsentiert werden, ohne dass es Kenntnis bedarf die elektronischen Einrichtungen entsprechend einzurichten, zu programmieren und auf die entsprechende Darstellung zu achten.

Ein weiterer wesentlicher Vorteil des erfindungsgemässen Systems besteht darin, dass die Unternehmen, die ein solches System zur Publikation von Werbung einsetzen, den administrativen Teil, insbesondere den Teil, der sich auf die Einrichtung solcher elektronischen Medien bezieht, outsourcen können und damit die Verantwortung der sach- und fachgerechten Werbung nicht mehr bei einem Mitarbeiter liegt. Zudem werden die an sich zur Einführung elektronischer Medien für Werbezwecke notwendigen Einführungskurse und sonstige Bedienungsunterrichtung eingespart.

Eine weitere Ausführung kann vorsehen, dass die Kommunikationseinheit zweigeteilt ausgebildet ist, wobei die Zweiteilung darin besteht, dass zum einen das Content-Management noch in dem Bereich ausgeführt werden, in dem die Datensteuerungseinheiten angeordnet sind. Dabei wird ausschliesslich der Content (die bereitgestellt Werbung) von der Kommunikationseinheit von einem externen Server im Pull-Verfahren abgerufen. Damit besteht die Möglichkeit, dass beispielsweise ein Reiseveranstalter oder eine Hotelkette selbst mehrere Einrichtungen mit bereitgestellter Werbung bedienen kann. Somit kann mit Hilfe des Content-Managements-Systems der Kunde selbst oder er zusammen mit seinen Werbepartnern die Werbeinhalte gezielt innerhalb von Sekunden an jedem Standort seiner Filialen separat, regional zusammengefasst oder landes- bzw. weltweit transportieren und zur Anzeige bringen. Spezielle Aktionen können im Voraus festgelegt werden, Inhalte können beliebig oft sogar mehrmals täglich geändert werden.

Weitere vorteilhafte Ausgestaltungen gehen aus der nachfolgenden Beschreibung, den Zeichnungen und den Ansprüchen hervor.
Kurze Beschreibung der Zeichnungen

Es zeigen:

Fig. 1 eine schematische Darstellung einer Ausführungsform eines erfindungsgemässen Systems zu Übertragung von digitalen und/oder analogen Video- und/oder Audiodaten;

Fig. 2 eine schematische Darstellung der Ausbildung eines Bildschirms zur Publikation der Video- und/oder Audiodaten mit dem erfindungsgemässen System;

Fig. 3 eine Darstellung eines konkreten Ausführungsbeispiels des erfindungsgemässen Systems gemäss Fig. 1 mit einer Funktionsdarstellung der Datensteuerungseinheit;

Fig. 4 eine weitere Darstellung der Funktionsweise der Datensteuerungseinheit gemäss den vorhergehenden Figuren.
Weg(e) zur Ausführung der Erfindung

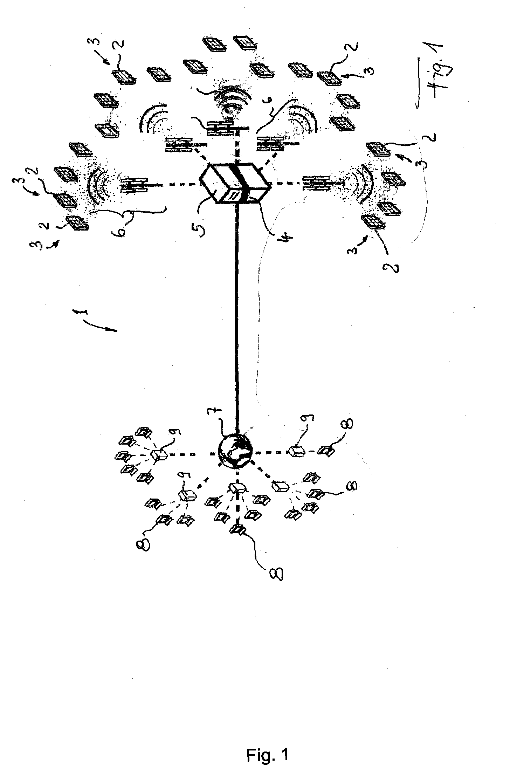

Das in den Fig. 1-4 dargestellte System 1 zur Übertragung von digitalen oder analogen Video- und/oder Audiodaten umfasst eine Vielzahl von Bildschirmen, die in den Figuren zusammen mit der Bezugsziffer 12 bezeichnet sind. Die Bildschirme dienen bei dem hier dargestellten Ausführungsbeispiel als "elektronische Plakate" in der Ausbildung von Werbedisplays zur Anzeige von Werbebotschaften in Form von Videoclips, Standbildern oder dergleichen. Sie bieten eine Präsentationsfläche, auf der ein Betrachter die Werbebotschaften betrachten kann. Die durch die Bildschirme 12 gezeigten Inhalte werden durch digitale oder analoge Video- und/oder Audiodateien erzeugt. Jeder einzelne Bildschirm 12 lässt sich individuell mit Daten versorgen, die für die jeweils von Ihnen anzuzeigenden Inhalte, beispielsweise Werbebotschaften, stehen. Die Funktionsweise des Systems sowie des Verfahrens wird nachfolgend näher erläutert:

Das erfindungsgemässe System umfasst im wesentlichen eine Datensteuerungseinrichtung 3, die vorzugsweise mit dem Bildschirm 2 gekoppelt ist. Sie dient dazu, die von einem Server 4 bereitgestellten Video- und/oder Audiodaten zu empfangen, zu speichern und zum Darstellen auf einem oder mehreren der Bildschirme 2 bereitzustellen.

Ferner umfasst das System 1 eine Kommunikationseinheit 5, die wiederum mit dem Server 4 gekoppelt ist. Sie dient dazu, die vom Server 4 bereitgestellten Daten aufzubereiten und bei einer Anfrage des Datensteuerungseinrichtung 3 diese Daten in Abhängigkeit von Vorgaben auszuwählen und bereitzustellen.

Bei dem in Fig. 1 dargestellten Ausführungsbeispiel sind die einzelnen Bildschirme 2 über drahtlose Verbindungen 6 miteinander gekoppelt. Alternativ hierzu kann auch vorgesehen sein, dass die Bildschirme 2 über ein Kommunikationsnetz, beispielsweise ein Ethernet miteinander verbunden sind.

In einer Weiterbildung ist vorgesehen, den Server 4 an das Internet 7 als global zugängliches Netzwerk anzuschliessen. In der Fig. 1 ist auf der linken Seite eine Anzahl von Einwahlpunkten des Internets 7 dargestellt, über die sie sich auf bekannte Weise mithilfe von Terminals 8, beispielsweise in Form von Personalcomputern und zwischengeschalteten weiteren Server 9 an Knotenpunkten, sowie weiteren nichtdargestellter elektronischer Komponenten eine Verbindung zum Internet 7 aufbauen lässt. Auf diese Weise lässt sich über die Terminals 8 Datensätze eingeben, die über das Internet 7 an den Server 4 weitergeleitet werden. Der Server 4 ist mit einer vergleichsweisen hohen Speicherkapazität ausgestattet und somit in der Lage, eine grosse Anzahl von Datensätzen zu speichern, mit welchen er über das Internet 7 von den Terminals 8 aus beschickt wird.

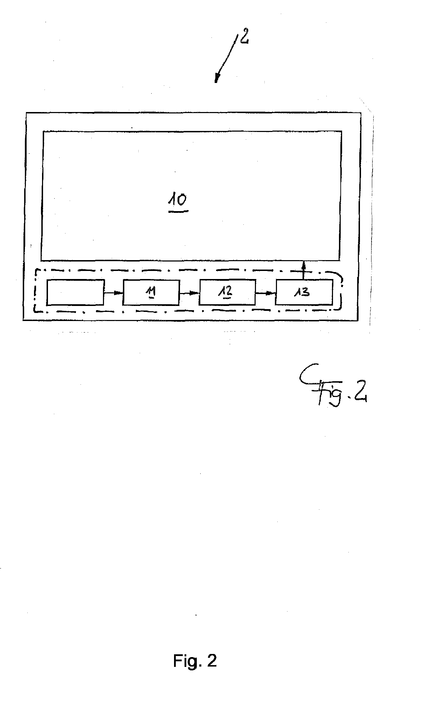

In Fig. 2 ist ein Bildschirm 2 dargestellt, der zum Zweck der Erfindung eingesetzt wird. Er weist eine Bildschirmoberfläche 10 auf, die dazu dient, die von dem Server 4 über die Datensteuerungseinrichtung 3 bereitgestellten Daten auf dem Bildschirm 2 darzustellen und entsprechend zu publizieren.

Um dies technisch zu ermöglichen, weist der Bildschirm 2 entweder als separates Element in der Ausbildung eines Add-Ons oder als integrativen Bestandteil des Bildschirms 2 die besagte Datensteuerungseinrichtung 3 auf. Ferner ist in derselben Einrichtung ein Speicher 11 vorgesehen, der die von dem Server 4 bereitgestellten Daten speichert. Eine Ausleseeinheit 12 und eine Anzeigeeinheit 13 sind technisch notwendige Hilfsmittel, um die auf dem Speicher 11 bereitgestellten Daten auf die Bildschirmoberfläche 10 des Bildschirms 2 zu produzieren.
Funktionsweise

Die anzeigenden Programminhalte bzw. Werbeaussagen in Form von Video- und/oder Audiodaten, d.h. Standbilder oder dynamische Bilder, werden auf die Bildschirme 2 wie folgt dargestellt:

Der Server 4 wird vorzugsweise via Internet 7 mit einer Anzahl von Datensätzen beschickt, die für entsprechende Werbeaussagen oder sonstige Video- und/oder Audiodaten stehen. Diese Daten werden vorzugsweise über Terminals 8 eingegeben, auf weiteren Servern 9 zwischengespeichert und über die entsprechenden Datenleitungen im Internet 7 auf den Server 4 übertragen.

Dort werden die Daten entsprechend bereitgestellt und von der Kommunikationseinheit 5 bereitgehalten, solange, bis die Datensteuerungseinrichtung 3 eine so genannte Pull-Anfrage an die Kommunikationseinheit 5 stellt. Die Anfrage beinhaltet im wesentlichen eine Identifikationsnummer des jeweiligen anfragenden Bildschirms mit dem Hintergrund, ob neue Daten zur Präsentation vorliegen. Nach einem Vergleich der Anfrage mit den in dem Server 4 gespeicherten Daten, wird von der Kommunikationseinheit 5 entschieden, ob neue Daten vorhanden sind. Sofern eine Zustimmung erfolgt, werden die entsprechenden Daten von dem Server 4 auswählt und die Datensteuerungseinrichtung 3 zieht (pulled) diese bereitgestellten Daten auf den Speicher 11 des Bildschirms 2. Nach Ablauf der noch auf den Bildschirmoberflächen 10 laufenden Werbeaussagen, werden die neuen Daten auf der Bildschirmoberfläche 10 des Bildschirms 2 dargestellt.

Wie beschrieben erfolgt keine Ausstrahlung eines Video- oder Datensatzes, der auf dem Server 4 bereitsgestellt wird in Echtzeit. Vielmehr werden die entsprechenden Daten auf einem Speicher 11 des Bildschirms 2 dargestellt und im definierten Zeitrhythmen abgespielt bzw. publiziert.

Es ist auch denkbar, lediglich Steuerdaten von dem Server 4 an die Datensteuerungseinrichtung 3 zu senden, um Einstellungen, wie beispielsweise Zeitintervalle für die Präsentation, Helligkeit, Lautstärke, etc. neu zu konfigurieren.

Eine wesentlicher Vorteil des vorliegenden Systems 1 besteht darin, dass am Aufstellort des Bildschirms 2 ausser einer Stromversorgung keine weiteren Komponenten benötigt werden. Das an sich autarke System 1 ist mit einer Empfangseinheit versehen, so dass die bereitgestellten Daten des Servers 4 auch über standardübliche Verbindungen, wie beispielsweise GPRS, UMTS, WIMAX oder Standardverbindungen wie WLAN, etc. empfangen werden können.

Die Aufstellung eines zusätzlichen Gerätes, wie beispielsweise eines Personalcomputers, der für die Bildschirmsteuerung des Bildschirms 2 notwendig wäre, ist hier nicht erforderlich.

Die Programminhalte lassen sich leicht ändern, in dem der Server 4 mit anderen Datensätzen beschickt wird. Eine individuelle Abstimmung der Inhalte der einzelnen Bildschirme 2 unabhängig voneinander ist noch möglich, in dem verschiedenen Bildschirmen 2 unterschiedliche Inhalte zugewiesen werden. In der Regel findet diese Diversifizierung bereits auf Ebene der Kommunikationseinheit 5 statt, so dass die Bildschirme 2 mit der Datensteuerungseinrichtung 3 vergleichbar mit Plakatwänden sind. Dies bedeutet, dass an ihnen selbst, um eine Werbung zu ändern, keine Einstellungen oder Installationen vorgenommen werden müssen.

Das Abfragen und "pullen" der neuen Daten geschieht vorzugsweise im Hintergrund, während die noch gespeicherten Video- und/oder Audiodaten abgespielt und auf der Bildschirmoberfläche 10 dargestellt werden.

Die Datensteuerungseinrichtung 3 umfasst entsprechende Software. Die Software dient dazu, die Einstellungen zur Publikation der gespeicherten Daten auf dem Speicher 11 zu konfigurieren. Vorzugsweise erfolgt diese Konfiguration über eine beigefügte Fernbedienung, so dass die Konfiguration selbst über den Bildschirm 2 bzw. dessen Bildschirmoberfläche 10 möglich ist.

Für den Pull-Service, den die Datensteuerungseinrichtung 3 ausführt, ist es notwendig, die entsprechenden Adressen und Ports anzugeben, um die jeweiligen Server 4 zu erreichen, die die Daten bereithalten. Ferner können Zeitzyklen vorgegeben werden, in denen die gespeicherten Daten 11 dargestellt werden. Diese Einstellungen sind einmalig bei der Installation des Bildschirms 2 auszuführen und müssen für weitere Anwendungen nicht mehr verändert werden. Daher entfallen aufwändige Einweisungen und Kurse für das Bedienpersonal.

Sofern weitere Elemente, wie beispielsweise Sensoren zum Detektieren von physikalischen Daten in der Umgebung des jeweiligen Bildschirms 2 vorgesehen sind, können auch diese Daten an den Server 4 übersandt werden. Die Kommunikationseinheit 5 sieht bei einer gesonderten Ausführung vor, dass in Abhängigkeit der übersandten Daten den Daten angepasste Werbung ausgewählt und für das Pullverfahren bereitstellt. Auf diese Weise ist es möglich, vollständig automatisch beispielsweise bei Regenwetter eine andere Werbung zu schalten, als beispielsweise bei Sonnenschein. Die Datensteuerungseinrichtung 3 ist dann derart ausgebildet, dass bei einer Änderung der physikalischen Umgebung andere Werbung abgefragt wird.

Alternativ kann auch über Sensoren detektiert werden, ob sich in der Umgebung des Plakats viele Menschen befinden. Dies kann zum Anlass genommen werden, in schnelleren Zyklen die Werbung zu verändern.

Die Kommunikationseinheit 5 als zentraler Kern der Erfindung. Sie dient dazu, die Daten, die auf dem Server 4 abgelegt und bevorratet sind, strukturiert und in Abhängigkeit unterschiedlicher Faktoren den Anfragen der Datensteuerungseinrichtung 3 anzubieten.

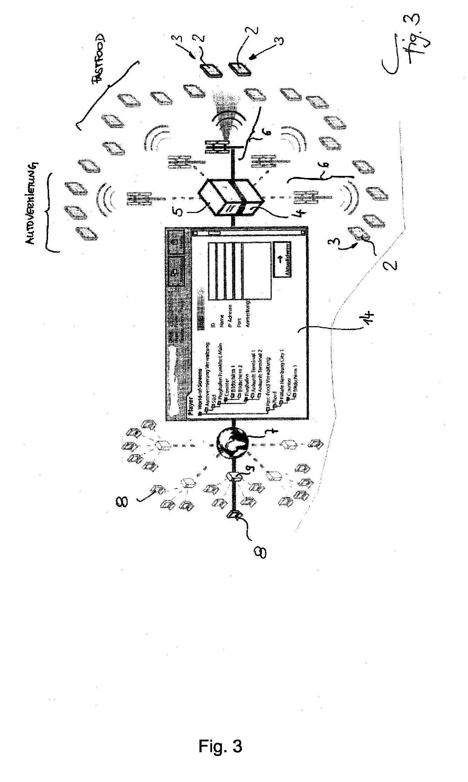

Die auf der Kommunikationseinheit 5 implementierte Software kann die in Fig. 3 dargestellte Bildschirmoberfläche 14 aufweisen. Wie hieraus zu entnehmen, kann für unterschiedliche Mandanten, hier beispielsweise eine Autovermietung oder eine Fast-Food-Kette die unterschiedlichen Bildschirme 2 direkt ausgewählt werden und diesen entsprechenden Bildschirmen 2 eine oder mehrere Daten, die auf dem Server 4 bevorratet sind, zugewiesen werden. Erfolgt nun von Seiten der Datensteuerungseinrichtung 3 eine Anfrage unter Angabe der Identifikationsnummer (ID) des entsprechenden Bildschirms 2, so kann unverzügliche der entsprechende Datensatz von dem Server 4 über die Kommunikationseinheit 5 über die drahtlosen Verbindungen 6 an die Bildschirme 2 übertragen werden.

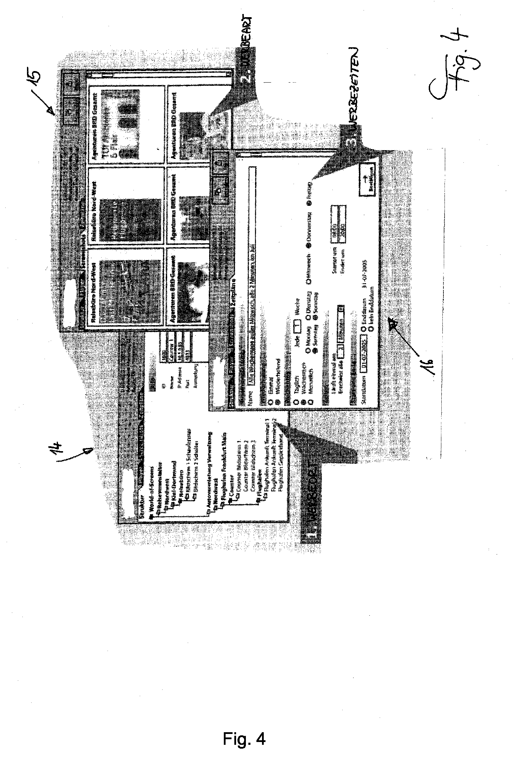

Eine Weiterbildung, wie sie in Fig. 4 dargestellt ist, zeigt den Ablauf der entsprechenden Implementierungen einer Werbung auf dem Bildschirm 2.

Zunächst wird über die, wie auch in Fig. 3 dargestellte Bildschirmoberfläche 14 der Werbeort ausgewählt werden. Durch anklicken einer vorzugsweise als Baumstruktur ausgebildeten Liste kann die Information des jeweiligen Bildschirms 2 auf der rechten Seite des Screenshots dargestellt werden. Die Identifikationsnummern (ID), Name, IP-Adresse, Port, etc. sind hierzu gespeichert.

Sobald der Werbeort festgelegt ist, kann in einem weiteren Screenshot 15 die Werbeart festgelegt werden. Schematisch werden Plakate oder Filme in Form von Video- und/oder Audiodaten zur Auswahl angeboten.

In einem dritten Schritt werden die Werbezeiten festgelegt. In einem weiteren Screenshot 16 kann durch einfaches Anklicken der Benutzer die entsprechenden Zeitpläne auswählen, wann und in welchem Zeitrhythmus die Werbung auf den Bildschirmen 2 erscheinen soll.

Aufgrund dieser Ausgestaltung ist eine Bedienung vor Ort an den Bildschirmen 2 zur Implementierung von Werbung nicht mehr notwendig.

Somit kann der Kunde selbst oder er mit seinem Werbepartner Inhalte gezielt innerhalb von Sekunden an jedem Standort seiner Filialen, separat, regional zusammengefasst oder landes- bzw. weltweit darstellen. Spezielle Aktionen können im Voraus geplant und festgelegt werden. Inhalte können beliebig oft, sogar mehrmals täglich, geändert werden, ohne dass es vor Ort eines Umbaus, einer Änderung, etc. bedarf. Auch bei Umstellung der Werbung wird der aktuelle Werbezyklus nicht unterbrochen, die gesamte Implementierung im Hintergrund abläuft.
Bezugszeichenliste

1. System
2. Bildschirm
3. Datensteuerungseinrichtung
4. Server
5. Kommunikationseinheit
6. drahtlose Verbindung
7. Internet
8. Terminals
9. weitere Server
10. Bildschirmoberfläche
11. Speicher
12. Ausleseeinheit
13. Anzeigeinheit
14. Bildschirmoberfläche
15. Screenshot
16. Screenshot

## Patentansprüche

1. System zur Übertragung von digitalen und/oder analogen Video- und/oder Audiodaten, nämlich zur Publikation von Nachrichten, Werbebotschaften oder dergleichen, die insbesondere an öffentlichen Plätzen und öffentlichen Einrichtungen auf einem oder mehreren Präsentationsflächen darstellbar sind,
**dadurch gekennzeichnet, dass**
als ein Teil des Systems (1) eine Datensteuerungseinheit (3) mit der Eigenschaft, Video- und/oder Audiodaten zu empfangen, zu speichern und zum Darstellen auf Projektionsflächen bereitzustellen, vorgesehen ist, wobei als Präsentationsfläche ein Bildschirm (2) oder mehrere Bildschirmen (2) auswählbar sind, die die bereitgestellten Video- und/oder Audiodaten auf den Projektionsflächen publizieren, sowie als weiteres Teil des Systems (1) eine entfernt von den Bildschirmen (2) angeordnete Kommunikationseinheit (3) vorgesehen ist, die die publizierten Video- und/oder Audiodaten , die auf einem Server (4) gespeichert sind, strukturiert und in Abhängigkeit des jeweiligen Bildschirms (2) bereitstellt, wobei die Datensteuerungseinrichtung (3) im Pull-Verfahren die Video- und/oder Audiodaten von der Kommunikationseinheit (5) anfordert und verarbeitet.

2. System zu Übertragung nach Anspruch 1, **dadurch gekennzeichnet, dass** die Datensteuerungseinrichtung (3) und der Bildschirm (2) eine Einheit bilden.

3. System zu Übertragung nach Anspruch 1 oder 2, **dadurch gekennzeichnet, dass** zusätzlich Sensoren vorgesehen sind, die zur Feststellung und Erzeugung von Daten aus physikalischen Werten hinsichtlich der Umgebung des jeweiligen Bildschirmes (2) dienen, wobei die Daten im Push-Verfahren an die Kommunikationseinheit (5) übertragen werden.

4. System zu Übertragung nach Anspruch 1, **dadurch gekennzeichnet, dass** die Datenübertragung von dem Server (4) zu den Datensteuerungseinrichtungen (3) der Bildschirme (2) zumindest streckenweise drahtlos erfolgt.

5. System zu Übertragung nach Anspruch 4, **dadurch gekennzeichnet, dass** die Datenübertragung von dem Server (4) zu den Datensteuerungseinrichtungen (3) der Bildschirme (2) über UMTS oder HSDPA erfolgt.

6. System zu Übertragung nach Anspruch 4, **dadurch gekennzeichnet, dass** die Datenübertragung von dem Server (4) zu den Datensteuerungseinrichtungen (3) der Bildschirme (2) über Wireless-LAN (WLAN) erfolgt.

7. System zu Übertragung nach Anspruch 4, **dadurch gekennzeichnet, dass** die Datenübertragung von dem Server (4) zu den Datensteuerungseinrichtungen (3) der Bildschirme (2) über ein Netzwerkkabel erfolgt.

8. System zu Übertragung nach Anspruch 1, **dadurch gekennzeichnet, dass** jede Datensteuerungseinrichtung (3) dazu vorgesehen ist, an zuvor eingestellten Zeitpunkten die an die jeweiligen Bildschirme (2) adressierten Daten von dem Server (4) abzurufen.

9. System zu Übertragung nach mindestens einem der vorhergehenden Ansprüche, **dadurch gekennzeichnet, dass** von dem Server (4) an die Datensteuerungseinrichtung (3) der Bildschirme (2) Daten bezüglich des Zeitpunkts der Anzeige der durch den Datensatz repräsentierten Inhalte auf dem Bildschirm (2) übertragen werden.

10. Datensteuerungseinrichtung zur Übertragung von digitalen und/oder analogen Video- und/oder Audiodaten, nämlich zur Publikation von Nachrichten, Werbebotschaften oder dergleichen, die insbesondere an öffentlichen Plätzen und öffentlichen Einrichtungen auf einem oder mehreren Präsentationsflächen darstellbar sind, **dadurch gekennzeichnet, dass**
die Datensteuerungseinheit (3) die Eigenschaft aufweist, - Video- und/oder Audiodaten zu empfangen, zu speichern und zum Darstellen auf Projektionsflächen bereitzustellen, vorgesehen ist, wobei als Präsentationsfläche ein Bildschirm (2) oder mehrere Bildschirmen (2) auswählbar sind, die die bereitgestellten Video- und/oder Audiodaten auf den Projektionsflächen publizieren und - mit einer Kommunikationseinheit (5) eines Servers (4) eine Verbindung zur Abfrage von Daten im PULL-Verfahren herstellt.

11. Datensteuerungseinrichtung nach Anspruch 10, **dadurch gekennzeichnet, dass** die Datensteuerungseinrichtung (3) und ein Bildschirm (2) zusammen mit einem Speicher (11), einer Ausleseeinheit (12) und einer Anzeigeeinrichtung (13) eine Einheit bilden.

12. Datensteuerungseinrichtung nach Anspruch 10 oder 11, **dadurch gekennzeichnet, dass** die Datensteuerungseinrichtung (3) über Mittel verfügt, die ein drahtloses Übertragen von Daten zu einer Kommunikationseinrichtung (5) ermöglicht.

13. Verfahren zur Übertragung von digitalen und/oder analogen Video- und/oder Audiodaten, nämlich zur Publikation von Nachrichten, Werbebotschaften oder dergleichen, die insbesondere an öffentlichen Plätzen und öffentlichen Einrichtungen auf einem oder mehreren Präsentationsflächen darstellbar sind, wobei als ein Teil des Systems (1) eine Datensteuerungseinheit (3) mit der Eigenschaft, Video- und/oder Audiodaten zu empfangen, zu speichern und zum Darstellen auf Projektionsflächen bereitzustellen, vorgesehen ist, wobei als Präsentationsfläche ein Bildschirm (2) oder mehrere Bildschirmen (2) auswählbar sind, die die bereitgestellten Video- und/oder Audiodaten auf den Projektionsflächen publizieren, sowie
als weiteres Teil des Systems (1) eine entfernt von den Bildschirmen (2) angeordnete Kommunikationseinheit (3) vorgesehen ist, die die publizierten Video- und/oder Audiodaten , die auf einem Server (4) gespeichert sind, strukturiert und in Abhängigkeit des jeweiligen Bildschirms (2) bereitstellt, wobei die Datensteuerungseinrichtung (3) im Pull-Verfahren die Video- und/oder Audiodaten von der Kommunikationseinheit (5) anfordert und verarbeitet, **gekennzeichnet durch** folgende Verfahrensschritte:a.) zeitliche oder auf Impuls gesteuerte Anfrage der Datensteuerungseinrichtung (3) an die Kommunikationseinrichtung (5) unter Angabe einer spezifizierten Adresse und einer Identifikationsnummer zum Erfragen hinsichtlich der Bereitstellung neuer Video- und/oder Audiodaten;b.) strukturiertes und in Abhängigkeit der jeweiligen Identifikationsnummer des Bildschirms (2) abhängiges Bereitstellen von neuen Video- und/oder Audiodaten **durch** die Kommunikationseinheit (5) undc.) Übertragen der Video- und/oder Audiodaten von der Kommunikationseinheit (5) zur Datensteuerungseinrichtung (3) im Pull-Verfahren.

14. Verwendung eines Systems (1) bestehend aus einer Datensteuerungseinheit (3) mit der Eigenschaft, Video- und/oder Audiodaten zu empfangen, zu speichern und zum Darstellen auf Projektionsflächen bereitzustellen, wobei als Präsentationsfläche ein Bildschirm (2) oder mehrere Bildschirmen (2) auswählbar sind, die die bereitgestellten Video- und/oder Audiodaten auf den Projektionsflächen publizieren, sowie bestehend aus einer entfernt von den Bildschirmen (2) angeordneten Kommunikationseinheit (3), die die publizierten Video- und/oder Audiodaten, die auf einem Server (4) gespeichert sind, strukturiert und in Abhängigkeit des jeweiligen Bildschirms (2) bereitstellt, zur Übertragung von digitalen und/oder analogen Video- und/oder Audiodaten, nämlich zur Publikation von Nachrichten, Werbebotschaften oder dergleichen, die insbesondere an öffentlichen Plätzen und öffentlichen Einrichtungen auf einem oder mehreren Präsentationsflächen darstellbar sind, wobei die Datensteuerungseinrichtung (3) im Pull-Verfahren die Video- und/oder Audiodaten von der Kommunikationseinheit (5) anfordert und die Kommunikationseinheit (5) wahlweise in Abhängigkeit der Tageszeit und/oder Wochentag und/oder Wetterlage und/oder vorhandenen Zielgruppen die Video- und/oder Audiodaten bereitstellt.
